# EUROPÄISCHE PATENTSCHRIFT

(11) **EP 3 653 583 B1**
(45) Veröffentlichungstag und Bekanntmachung des Hinweises auf die Patenterteilung: **13.08.2025**
(21) Anmeldenummer: 19209490.2
(22) Anmeldetag: 15.11.2019
(51) Int. Cl.: C02F 1/20, A01C 3/00, C02F 11/13, C05F 17/40, C05F 17/80, C05F 3/00, C05F 3/06, C05F 17/986, C02F 101/16, C02F 103/20

(54) **VERFAHREN ZUR AUFBEREITUNG VON BIOLOGISCH ABBAUBAREN MATERIALIEN UND VORRICHTUNG ZUR DURCHFÜHRUNG DES VERFAHRENS**
METHOD FOR PREPARING BIODEGRADABLE MATERIALS AND DEVICE FOR CARRYING OUT SAID METHOD
PROCÉDÉ DE TRAITEMENT DES MATÉRIAUX BIODÉGRADABLES ET DISPOSITIF DE MISE EN UVRE DUDIT PROCÉDÉ

(30) Priorität: 16.11.2018 DE 102018128874
(43) Veröffentlichungstag der Anmeldung: 20.05.2020
(73) Patentinhaber: Rohn Thomas, 8709 Marcali (HU)
(72) Erfinder: THIEL, Alfred, 49624 Löningen-Bunnen (DE); ROHN, Thomas, 26556 Nenndorf (DE)
(74) Vertreter: Jabbusch, Matthias

(56) Entgegenhaltungen:
- EP-A1- 2 543 641
- EP-A2- 2 149 542
- US-A1- 2007 062 231
- US-A1- 2017 369 345

## Beschreibung

Die Erfindung betrifft ein Verfahren zur Aufbereitung von biologisch abbaubaren Materialien, insbesondere Gärresten, Geflügelmist, Schweinegülle oder Rindergülle, bei dem das biologisch abbaubare Material in einem Aufbereiter hygienisiert wird, bei dem während der Hygienisierung in dem Aufbereiter flüchtige Substanzen, insbesondere Ammoniak, aus dem biologisch abbaubaren Material ausgetrieben werden und in einem Gasgemisch angereichert werden, bei dem das angereicherte Gasgemisch aus dem Aufbereiter abgezogen wird, einer Aufreinigung zugeführt wird und in der Aufreinigung mit einer Waschflüssigkeit aus dem Gasgemisch ausgewaschen wird, und bei dem das dann ammoniumarme, biologisch abbaubare Material getrennt von dem Gasgemisch aus dem Aufbereiter entnommen wird und einer weiteren Verwendung zugeführt wird, wobei in dem Aufbereiter ein Unterdruck anliegt, und wobei die flüchtigen Substanzen aufgrund ihres jeweiligen Partialdrucks durch den anliegenden Unterdruck dem biologisch abbaubaren Material entzogen werden. Weiter betrifft die Erfindung auch eine Vorrichtung zur Aufbereitung von biologisch abbaubaren Materialien, insbesondere Gärresten, Geflügelmist, Schweinegülle oder Rindergülle, insbesondere zur Durchführung des vorgenannten Verfahrens.

In der DE 10 2016 118 761 A1 ist ein Aufbereitungsverfahren für biologisch abbaubare Materialien beschrieben, bei dem Ammoniak aus dem biologisch abbaubaren Material entfernt werden soll. Das Ammoniak soll dabei unter Zugabe von Zuschlagstoffen, wie Kalk, aus dem biologisch abbaubaren Material ausgetrieben und in einem Gasgemisch einer Aufreinigung zugeführt werden. Das Austreiben erfolgt dabei, indem die Flüssigkeit bzw. das Gasgemisch mittels chemischer Reaktion aus dem Feststoff getrennt, insbesondere abgetrennt, wird. Die bei der Aufreinigung gewonnenen Ammoniumverbindungen und das ammoniumarme, biologisch abbaubare Material sollen dann getrennt gesammelt und gegebenenfalls weiterverarbeitet werden. Da dem biologisch abbaubaren Material neben dem Kalk zumeist noch weitere Zuschlagstoffe, wie Polymere und Elektrolyte, zugegeben werden, damit eine Vortrocknung bzw. Abscheidung der Feststoffe aus der Rohflüssigkeit erreicht wird, um dann das Ammoniak aus diesem abzutrennen, kann das biologisch abbaubare Material nach der Aufbereitung nicht uneingeschränkt weiterverwendet werden.

In der US 2017/369345 A1 soll Ammoniak zur Stickstoffdüngerherstellung aus biologisch abbaubaren Materialien gewonnen werden. Hierzu wird das biologisch abbaubare Material einem Entgasungsbehälter zugeführt. An diesen soll mittels einer Vakuumpumpe ein Unterdruck anliegen, wobei sich bildendes Ammoniak in einem Gasgemisch abgezogen und wenigstens einer Gaswäscheeinrichtung zugeführt wird. Für die US 2017/369345 A1 wesentlich ist dabei, dass eine zum Auswaschen des Ammoniaks benötigte Säure im Kreis geführt wird. Weiter offenbart die US 2017/369345 A1 als wesentlich, dass die unterdruckerzeugende Vakuumpumpe downstreamseitig des Entgasungsbehälters in Strömungsrichtung des Gasgemisches hinter der Gaswäscheeinrichtung angeordnet ist und somit der erzeugte Unterdruck auch in der Gaswäscheeinrichtung anliegt.

Die bevorzugt in Reihe geschalteten Gaswäscheeinrichtungen der US 2017/369345 A1 sind dabei dem durch die gewählte Verschaltung und Positionierung der Vakuumpumpe bedingten Druckabfall geschuldet, wobei bei diesem Aufbau nur durch die serielle Verschaltung mehrerer Gaswäscheeinrichtungen eine vollständige Reduktion des Ammoniaks gewährleistbar ist.

Aufgabe der Erfindung ist es daher ein derartiges Verfahren dahingehend weiterzuentwickeln, dass das aufbereitete, biologisch abbaubare Material möglichst vielfältig weiterverwendbar ist und dass eine möglichst vollständige Abtrennung von Stickstoffverbindungen wie insbesondere Ammoniak erfolgen kann.

Die Lösung dieser Aufgabe erfolgt verfahrensmäßig mit den Merkmalen des Anspruchs 1 und vorrichtungsmäßig mit den Merkmalen des Anspruchs 8. Weiterbildungen und vorteilhafte Ausgestaltungen sind in den jeweils nachgeordneten Ansprüchen angegeben.

Das Verfahren zur Aufbereitung von biologisch abbaubaren Materialien, insbesondere Gärresten, Geflügelmist, Schweinegülle oder Rindergülle, bei dem das biologisch abbaubare Material in einem Aufbereiter hygienisiert wird, bei dem während der Hygienisierung in dem Aufbereiter flüchtige Substanzen, insbesondere Ammoniak, aus dem biologisch abbaubaren Material ausgetrieben werden und in einem Gasgemisch angereichert werden, bei dem das angereicherte Gasgemisch aus dem Aufbereiter abgezogen wird, einer Aufreinigung zugeführt wird und die flüchtigen Substanzen in der Aufreinigung mit einer Waschflüssigkeit aus dem Gasgemisch ausgewaschen werden, und bei dem das dann ammoniumarme, biologisch abbaubare Material getrennt von dem Gasgemisch aus dem Aufbereiter entnommen wird und einer weiteren Verwendung zugeführt wird, wobei in dem Aufbereiter ein Unterdruck anliegt, und wobei die flüchtigen Substanzen aufgrund ihres jeweiligen Partialdrucks durch den anliegenden Unterdruck dem biologisch abbaubaren Material entzogen werden, zeichnet sich erfindungsgemäß dadurch aus, dass durch den an dem Aufbereiter anliegenden Unterdruck eine stufenweise Druckabsenkung in dem Aufbereiter erfolgt, dass durch die Druckabsenkung in dem Aufbereiter auf einer ersten Druckstufe aufgrund des jeweiligen Partialdrucks flüchtige Substanzen, insbesondere Ammoniak, aus dem biologisch abbaubaren Material ausgetrieben werden, dass, nach dem die flüchtigen Substanzen ausgetrieben wurden, der Druck in dem Aufbereiter auf eine zweite, niedrigere Druckstufe abgesenkt wird, so dass sich der Siedepunkt in dem Aufbereiter derart verschiebt, dass im Aufbereiter enthaltenes Wasser seinen Aggregatzustand ändert und in dem Aufbereiter Wasserdampf gebildet wird, und dass der im Aufbereiter entstandene Wasserdampf als wasserdampfhaltiges Gasgemisch einer Kühleinheit zugeführt wird und dass der Wasserdampf in der Kühleinheit kondensiert wird.

Um den Unterdruck in dem Aufbereiter zu erzeugen, liegt an dem Aufbereiter vorzugsweise ein Vakuum von bis zu 300 mbar, insbesondere bis zu 250 mbar, an. Der in dem Aufbereiter vorliegende Unterdruck führt dazu, dass die flüchtigen Substanzen, wie beispielsweise Ammoniak, dem biologisch abbaubaren Material entzogen werden. Die Abtrennung der flüchtigen Substanzen erfolgt damit bei dem erfindungsgemäßen Verfahren physikalisch, so dass auf bisher notwendige Zuschlagstoffe, wie Polymere oder Elektrolyte, verzichtet werden kann.

Das biologisch abbaubare Material wird dabei bevorzugt über eine Verweilzeit von mindestens 60 Minuten in dem Aufbereiter durchmischt. Durch Temperaturen von mehr als 70 °C in dem Aufbereiter wird vorteilhafterweise auch eine Hygienisierung des biologisch abbaubaren Materials erreicht.

Die Stufen der stufenweisen Druckabsenkung in dem Aufbereiter ergeben sich dabei durch die Partialdrücke der einzelnen, aus dem biologisch abbaubaren Material auszutreibenden Komponenten. Auf einer ersten Druckstufe werden dann durch die Druckabsenkung in dem Aufbereiter aufgrund des jeweiligen Partialdrucks flüchtige Substanzen, insbesondere Ammoniak, aus dem biologisch abbaubaren Material ausgetrieben. Die flüchtigen Substanzen gasen dabei entsprechend ihres jeweiligen Partialdruckes aus dem biologisch abbaubaren Material aus, wobei zuerst die Substanzen mit dem höchsten Partialdruck ausgasen.

In einer beispielhaften Zusammensetzung eines biologisch abbaubaren Materials, das als flüchtige Substanzen Ammoniak, Schwefelwasserstoff und Kohlenstoffdioxid enthält, entgast zuerst Ammoniak, dann Schwefelwasserstoff und als letztes Kohlenstoffdioxid. Jeder der vorgenannten Substanzen ist dabei eine Druckstufe zugeordnet, bei der Temperatur und Druck mit der zu verdampfenden Substanz gemäß ihrer Sättigungsdampfdruckkurve korrespondieren und die Substanz aus dem biologisch abbaubaren Material ausgast. Die einzelnen Druckstufen der flüchtigen Substanzen sind in Abhängigkeit von deren jeweiligem Partialdruck unterschiedlich stark voneinander abgegrenzt und teilweise fließend ineinander übergehend. Je stärker sich die Partialdrücke unterscheiden, desto klarer sind die Druckstufen voneinander abgegrenzt. Die erste Druckstufe kann demnach aus einer Vielzahl einzelner Druckstufen bestehen, wobei jeder der ersten Druckstufen gemeinsam ist, dass die Gasgemische der Aufreinigung zugeführt werden. In der Aufreinigung werden die flüchtigen Substanzen dann mit einer Waschflüssigkeit aus dem Gasgemisch ausgewaschen. Gemeinsam ist jeder ersten Druckstufe zudem, dass sich der Druck in dem Aufbereiter nachdem die jeweilige flüchtige Substanz entgast ist, weiter absenkt.

Weiter führt der Unterdruck auf der ersten Druckstufe zu einem größeren Anteil der aus dem biologisch abbaubaren Material entzogenen flüchtigen Substanzen, insbesondere einem größeren Ammoniakanteil, in dem aus dem Aufbereiter abgezogenen Gasgemisch. Bei der weiteren Aufreinigung dieses Gasgemisches mit der Waschflüssigkeit hat das Gasgemisch aufgrund des vorteilhafterweise auch bei der Aufreinigung vorliegenden Unterdrucks dann ein gegenüber einer Durchführung des Verfahrens bei Atmosphärendruck deutlich reduziertes Volumen, insbesondere beträgt das Volumen des Gasgemisches bei anliegendem Unterdruck nur ein 1/40 des Volumens bei Atmosphärendruck. Eine Anlage zur Aufreinigung des auf der ersten Druckstufe abgezogenen Gasgemisches kann dementsprechend kleiner dimensioniert sein.

Nachdem die flüchtigen Substanzen, insbesondere das Ammoniak, ausgetrieben wurden, wird der Druck in dem Aufbereiter auf eine zweite, niedrigere Druckstufe abgesenkt, so dass sich der Siedepunkt in dem Aufbereiter derart verschiebt, dass im Aufbereiter enthaltenes Wasser seinen Aggregatzustand ändert und in dem Aufbereiter Wasserdampf gebildet wird. Auf der zweiten Druckstufe erfolgt dementsprechend eine Trocknung des biologisch abbaubaren Materials. Der dabei im Aufbereiter entstandene Wasserdampf wird ebenso wie zuvor das ammoniakhaltige Gasgemisch als wasserdampfhaltiges Gasgemisch aus dem Aufbereiter abgezogen, wobei das wasserdampfhaltige Gasgemisch einer nachfolgenden Kühleinheit zugeführt wird.

Obgleich ein Großteil des Ammoniaks und anderer umweltgefährdender Stoffe dem biologisch abbaubaren Material bereits in der ersten Druckstufe bzw. einer der ersten Druckstufen entzogen wurden, kann auch das wasserdampfhaltige Gasgemisch noch mit Ammoniak und anderen Schwebstoffen belastet sein. Um mögliche Beeinträchtigungen der Umwelt gering zu halten, ist daher nach einer Weiterbildung vorgesehen, dass das Gasgemisch zwischen dem Aufbereiter und der Kühleinheit in einem Kreislauf geführt wird, insbesondere einem geschlossenen Kreislauf geführt wird. Durch den geschlossenen Kreislauf ist sichergestellt, dass auch diese Restmengen an flüchtigen Substanzen, insbesondere Ammoniak, die nicht der Aufreinigung mit der Waschflüssigkeit zugeführt werden, nicht in die Umwelt gelangen.

In der Kühleinheit wird der Wasserdampf dann vorteilhafterweise kondensiert, um diesen aus dem Gasgemisch abzutrennen. Zusammen mit dem Wasserdampf kondensieren dann auch die Restmengen an flüchtigen Substanzen, insbesondere Ammoniak. Das dem Aufbereiter aus der Kühleinheit nach dem Kondensieren von Wasserdampf und flüchtigen Substanzen, insbesondere Ammoniak wieder zugeführte, unbeladene Gasgemisch kann so im Aufbereiter erneut mit Wasserdampf und Restammoniak beladen werden.

Das biologisch abbaubare Material verbleibt dabei so lange in dem Aufbereiter, bis das biologisch abbaubare Material einen Trockensubstanzgehalt von wenigstens 79 % bis 82 % aufweist. Das biologisch abbaubare Ausgangsmaterial hatte dagegen zumeist einen Trockensubstanzgehalt zwischen 8 % und 11 %.

Das Kondensat aus der Kühleinheit kann auf einfache Weise in einem Kondensatreservoir gesammelt werden. Um den Rest an flüchtigen Substanzen, insbesondere Ammoniak auch aus dem Kondensat abzutrennen, kann das aus der Kühleinheit aufgefangene Kondensat nach einer Weiterbildung eingedampft werden, wobei das im Kondensat enthaltene Wasser verdampft und Verunreinigungen aus dem Wasser abgetrennt werden. Auf einfache Weise wird das Kondensat dabei batchweise aus dem Kondensatreservoir zum Eindampfen geleitet. Dies ermöglicht eine vereinfachte Konstruktion und Verfahrensweise, bei der nur das Kondensatreservoir unter Vakuum stehen muss, das Eindampfen aber bei Atmosphärendruck erfolgen kann.

Der im Unterdruck betriebene Teil des Verfahrens ist somit auf alle von dem Gasgemisch aus dem Aufbereiter durchströmbaren Teile sowie das Kondensatreservoir begrenzt.

Zum oder vor dem Eindampfen wird dem Kondensat vorteilhafterweise zudem Schwefelsäure beigemengt, die mit dem im Kondensat enthaltenen Ammoniak zu Ammoniumsulfat reagiert. Als Konzentrat des Eindampfens fällt somit eine Ammoniumsulfat-Lösung an, insbesondere eine mindestens 80-prozentige Ammoniumsulfat-Lösung an.

Das beim Eindampfen als Destillat anfallende Wasser weist eine hohe Reinheit, idealerweise 0 ppm auf, welches durch einen Aufhärtungsfilter wieder remineralisiert und einem außerhalb des Verfahrens liegenden Wirtschaftskreislauf wieder zugeführt werden kann.

Um die Aufbereitung des biologisch abbaubaren Materials zu beschleunigen kann dem biologisch abbaubaren Material eine Kalkmischung beigemengt werden. Die Beimengung der Kalkmischung erfolgt vorteilhafterweise bevor das biologisch abbaubare Material zur Hygienisierung und Trocknung in den Aufbereiter gelangt. Hierzu kann dem Aufbereiter ein Mischer vorgeschaltet sein. Das Vermischen von Kalkmischung und biologisch abbaubarem Material gewährleistet dabei eine gleichmäßige, homogene Masse mit einheitlichem Trockensubstanzgehalt.

Das biologisch abbaubare Material reagiert dann in dem Aufbereiter zusätzlich mit der Kalkmischung, wobei durch Aufmischen in dem Aufbereiter eine Wärme von mindestens 70 °C erreicht wird. Alternativ oder ergänzend kann die Wärme auch mittels Heiztechnik oder Abwärme eines vorangegangenen Prozesses, beispielsweise einer Biogasanlage, erreicht werden, wenn nicht genug Wärme aus dem Prozess selbst entsteht.

Zur Weiterverarbeitung kann das aus dem Aufbereiter entnommene, trockene biologisch abbaubare Material pelletiert werden, um dieses beispielsweise als Wirtschaftsdünger einzusetzen.

Gemäß einer Weiterbildung kann das aus dem Aufbereiter entnommene, dann trockene biologisch abbaubare Material im Rahmen einer Weiterverarbeitung auch mit aus dem Verfahren gewonnenen Ammoniumsulfat vermengt werden. Das Ammoniumsulfat kann dabei sowohl aus der Aufreinigung des dem biologisch abbaubaren Material bei der ersten Druckstufe bzw. einer der ersten Druckstufen entzogenen Ammoniak als auch aus dem aufgereinigten Kondensat gewonnen sein. Die Vermengung des aus dem Aufbereiter entnommenen biologisch abbaubaren Materials mit dem Ammoniumsulfat erfolgt dabei bevorzugt in einem der Pelletierung vorgeschalteten Dosierbehälter und zwar bevor das biologisch abbaubare Material zu Pellets gepresst wird. Anstatt das Ammoniumsulfat mit dem biologisch abbaubaren Material zu vermengen, kann das Ammoniumsulfat auch auf die gepressten Pellets aufgesprüht werden, beispielsweise im Vorfeld einer Kommissionierung der fertigen Pellets.

Weiter betrifft die Erfindung auch eine Vorrichtung zur Aufbereitung von biologisch abbaubaren Materialien, insbesondere Gärresten, Geflügelmist, Schweinegülle oder Rindergülle, insbesondere zur Durchführung des vorgenannten Verfahrens, mit wenigstens einem Aufbereiter, welcher einen geschlossenen Behälter mit einem Mischwerk zur Aufnahme des biologisch abbaubaren Materials aufweist und einer Entnahmeeinrichtung für ammoniumarmes, biologisch abbaubares Material aus dem Aufbereiter, und wenigstens einer an den Aufbereiter anschließenden Aufreinigungseinrichtung für ein aus dem geschlossenen Behälter abziehbares Gasgemisch, aufweisend wenigstens eine Waschkolonne, die geeignet ist Ammoniak und andere flüchtige Substanzen aus dem Gasgemisch auszuwaschen, wobei dem Aufbereiter eine Unterdruckeinheit zugeordnet ist. Diese Vorrichtung zeichnet sich dadurch aus, dass die Unterdruckeinheit der Aufreinigungseinrichtung in Strömungsrichtung wenigstens eines Teilstroms des aus dem Aufbereiter abzuziehenden Gasgemisches vorgeschaltet ist, dass die Unterdruckeinheit eine Kühleinheit aufweist, und dass die Kühleinheit ein Kondensatreservoir aufweist.

Diese Unterdruckeinheit ermöglicht es ein Vakuum an den Behälter des Aufbereiters anzulegen, so dass beim Aufbereiten und/oder Hygienisieren des biologisch abbaubaren Materials im Aufbereiter ein Unterdruck vorliegt. Der Unterdruck in dem Aufbereiter bewirkt, dass dem biologisch abbaubaren Material nacheinander enthaltene flüchtige Substanzen, wie beispielsweise Ammoniak und Wasserdampf, entzogen werden. Die flüchtigen Substanzen entweichen dabei entsprechend ihrer jeweiligen Flüchtigkeit und ihren jeweiligen Partialdrücken auf unterschiedlichen Druckstufen. Als Druckstufe ist der jeweilige absolute Druck bezeichnet, bei dem die jeweilige Komponente dem biologisch abbaubaren Material entzogen wird. Allen Druckstufen gemein ist dabei, dass diese einen absoluten Druck unterhalb des Atmosphärendrucks aufweisen.

Erfindungsgemäß weist die Unterdruckeinheit wenigstens einen Unterdruckerzeuger, insbesondere eine Vakuumpumpe, auf, mit dem der im Aufbereiter, insbesondere in dem Behälter des Aufbereiters, benötigte Unterdruck, insbesondere das Vakuum, erzeugbar ist. Weiter kann mit dem Unterdruckerzeuger vorteilhafterweise nicht nur der Aufbereiter, sondern auch die sich anschließende Aufreinigungseinrichtung für das aus dem geschlossenen Behälter abziehbare Gasgemisch im Unterdruck betrieben werden. Der mit dem Unterdruckerzeuger erzeugbare Unterdruck beträgt vorteilhafterweise einen Absolutdruck von bis zu 300 mbar, insbesondere von bis zu 250 mbar.

Weiter kann die Unterdruckeinheit wenigstens eine Kühleinheit aufweisen. In diese Kühleinheit wird der aus dem Aufbereiter abgezogene Wasserdampf eingeleitet, insbesondere das wasserdampfhaltige Gasgemisch eingeleitet, und soweit heruntergekühlt bis der Wasserdampf in der Kühleinheit kondensiert. Das Kondensat des Wasserdampfes kann dann auf einfache Weise von dem Gasgemisch abgetrennt werden. Zum Sammeln des Kondensats weist die Kühleinheit daher in weiterer Ausgestaltung wenigstens ein Kondensatreservoir auf.

Um Belastungen für die Umwelt durch beispielsweise entweichende Gase bei der Aufbereitung zu vermeiden, ist nach einer Weiterbildung vorgesehen, dass zwischen der Kühleinheit und dem geschlossenen Behälter des Aufbereiters ein geschlossener Kreislauf für das Gasgemisch ausgebildet ist. Neben minimierten Belastungen für die Umwelt ist durch den Kreislauf für das Gasgemisch erreicht, dass dieses mehrfach als Transportmedium für aus dem biologisch abbaubaren Material entzogene flüchtige Substanzen, insbesondere Wasserdampf, verwendet werden kann. Um das Gasgemisch aus der Kühleinheit zurück zum Aufbereiter zu fördern, kann in dem Kreislauf zwischen Kühleinheit und Aufbereiter zudem ein Umluftgebläse angeordnet sein.

Gemäß einer bevorzugten Anordnung ist die Kühleinheit dabei in Strömungsrichtung wenigstens eines Teilstroms des aus dem Aufbereiter abzuziehenden Gasgemisches, insbesondere des auf einer ersten Druckstufe aus dem Aufbereiter abzuziehenden Gasgemisches, zwischen dem Aufbereiter und dem Unterdruckerzeuger angeordnet. Über die dem Unterdruckerzeuger dann vorgeschaltete Kühleinheit werden so sämtliche jeweils als Gasgemisch aus dem Aufbereiter abgezogenen flüchtigen Substanzen geleitet. In Abhängigkeit von der jeweiligen Druckstufe werden die unterschiedlichen Gasgemische dann weitergeleitet, wobei ein hauptsächlich mit flüchtigen Substanzen wie Ammoniak beladenes Gasgemisch aus der ersten Druckstufe der Aufreinigungseinrichtung zugeleitet wird und ein hauptsächlich mit Wasserdampf beladenes Gasgemisch über den Kreislauf zurück in den Aufbereiter geleitet wird, nachdem der Wasserdampf in der Kühleinheit kondensiert ist. Insbesondere das der Aufreinigungseinrichtung zuzuführende zumeist vor allem ammoniakhaltige Gasgemisch kann dabei über die Vakuumpumpe zu der Aufreinigungseinrichtung strömen.

An das Kondensatreservoir der Kühleinheit ist nach einer Weiterbildung ein Eindampfer angeschlossen, um das zusammen mit dem Wasserdampf kondensierte Ammoniak aus dem aufgefangenen Kondensat zu entfernen. Auf einfache Weise wird das Kondensat batchweise aus dem Kondensatreservoir zu dem Eindampfer geleitet. Dies ermöglicht eine vereinfachte Konstruktion der Vorrichtung, bei der nur das Kondensatreservoir nicht aber der Eindampfer unter Vakuum stehen muss.

Als Destillat fällt Wasser mit hoher Reinheit an. Dieses Wasser kann durch einen Aufhärtungsfilter remineralisiert und dem Wirtschaftskreislauf wieder zugeführt werden. Als Eindampfkonzentrat verbleibt eine mindestens 80-prozentige Ammoniumsulfat-Lösung, die zum Beispiel als Flüssigdünger verwendet werden kann und Mineraldünger ersetzen kann. Die beim Eindampfen anfallende Ammoniumsulfat-Lösung kann zudem mit der aus der Aufreinigungseinrichtung gewonnenen Ammoniumsulfat-Lösung vermengt werden. Entsprechend können jeweils angeschlossene Ableitungen für die gewonnene Ammoniumsulfat-Lösung in einem gemeinsamen Dosierbehälter, Lagerbehälter oder Pufferbehälter zusammengeführt werden.

Die Aufreinigungseinrichtung für aus dem geschlossenen Behälter des Aufbereiters abführbares, mit flüchtigen Substanzen wie Ammoniak angereichertes Gasgemisch weist nach einer Weiterbildung wenigstens eine Waschkolonne mit wenigstens einem Zulauf und wenigstens einem Ablauf für das aufzureinigende Gasgemisch und wenigstens einen Zulauf für eine Waschflüssigkeit auf. Das Gasgemisch strömt dabei in der Waschkolonne aufwärts und die Waschflüssigkeit in entgegengesetzte Richtung von oben nach unten, so dass die Waschkolonne im Gegenstromprinzip betrieben wird. Aufgereinigtes Gasgemisch ist somit an einem oberen Ende der Waschkolonne abführbar und Ammoniumsulfat kann an einem unteren Ende der Waschkolonne entnommen werden. Durch Füllkörper innerhalb der Waschkolonne kann zudem ein besserer Austausch zwischen Waschflüssigkeit und Gasgemisch erreichbar sein. Eine geeignete Waschflüssigkeit ist beispielsweise ein Wasser-Schwefelsäure-Gemisch mit einem pH-Wert zwischen 3 und 6.

In einer bevorzugten Ausgestaltung der Erfindung sind zudem wenigstens zwei Aufbereiter parallelgeschaltet. Bevorzugt werden die zwei Aufbereiter in einem Wechselmodus betrieben. Der Wechselmodus ermöglicht ein abwechselndes Betreiben der Aufbereiter, wobei in einem Aufbereiter biologisch abbaubares Material behandelt werden kann und ein anderer Aufbereiter zeitgleich beschickt und entleert werden kann. Bei zwei Aufbereitern sind dann entsprechend auch doppelte Anschlüsse vorzusehen und vorteilhaft zwei mit jeweils mit den Aufbereitern verbundene Kühleinheiten. Zwei Kühleinheiten ermöglichen zudem, dass biologisch abbaubare Materialien in den beiden Aufbereitern zeitgleich auf unterschiedlichen Druckstufen betrieben werden können.

In Abhängigkeit von den Eigenschaften des biologisch abbaubaren Materials kann eine Vorbehandlung des biologisch abbaubaren Materials erforderlich sein. Eine solche Vorbehandlung kann darin bestehen das biologisch abbaubare Material zu zerkleinern und zu homogenisieren. Hierzu kann dem Aufbereiter eine Vorbehandlungseinheit für das biologisch abbaubare Material vorgeschaltet sein. In der Vorbehandlungseinheit kann ein Werkzeug zum Zerkleinern des biologisch abbaubaren Materials angeordnet sein. Zudem kann in der Vorbehandlungseinheit mittels eines Mischwerks auch ein Vermischen des biologisch abbaubaren Materials oder verschiedener biologisch abbaubarer Materialien erfolgen.

Neben einer möglicherweise notwendigen Zerkleinerung oder Homogenisierung kann in Abhängigkeit von dem biologisch abbaubaren Material auch die Zugabe einer Kalkmischung erforderlich sein, um das biologisch abbaubare Material aufzubereiten. Nach einer Weiterbildung der Erfindung kann dem Aufbereiter daher auch eine Zugabeeinrichtung für eine Kalkmischung vorgeschaltet sein. Durch die Kalkmischung wird neben der physikalischen Abtrennung der flüchtigen Substanzen aus dem biologisch abbaubaren Material zudem eine chemische Reaktion bewirkt, die den Prozess des Austreibens der flüchtigen Substanzen verstärkt.

Eine vorteilhafte Konstruktion der Zugabeeinrichtung ist durch einen Schneckenförderer gewährleistet, in dem die Kalkmischung und das biologisch abbaubare Material miteinander vermischt werden. Der Kalkmischung und dem biologisch abbaubaren Material kann dann auf einfache Weise eine gemeinsame Eintrittsöffnung in den geschlossenen Behälter des Aufbereiters zugeordnet sein. Eine Zuführung über einen Schneckenförderer stellt dabei auch bei kontinuierlicher Zugabe von biologisch abbaubarem Material in den geschlossenen Behälter des Aufbereiters sicher, dass in dem Aufbereiter, insbesondere dem geschlossenen Behälter des Aufbereiters, ein Unterdruck anliegt. Vorzugsweise werden zusätzlich zum Aufbereiter und zum Kondensatreservoir auch die Aufreinigungseinrichtung und die Unterdruckeinheit im Unterdruck betrieben.

Um die für eine Hygienisierung des biologisch abbaubaren Materials nötigen und gesetzlich vorgeschriebenen Temperaturen in dem Aufbereiter sicherzustellen, kann nach einer Weiterbildung auch eine dem geschlossenen Behälter des Aufbereiters zugeordnete Heizeinrichtung vorgesehen sein. Über diese Heizeinrichtung kann dann externe Energie zugeführt werden, beispielsweise Abwärme von einer Biogasanlage.

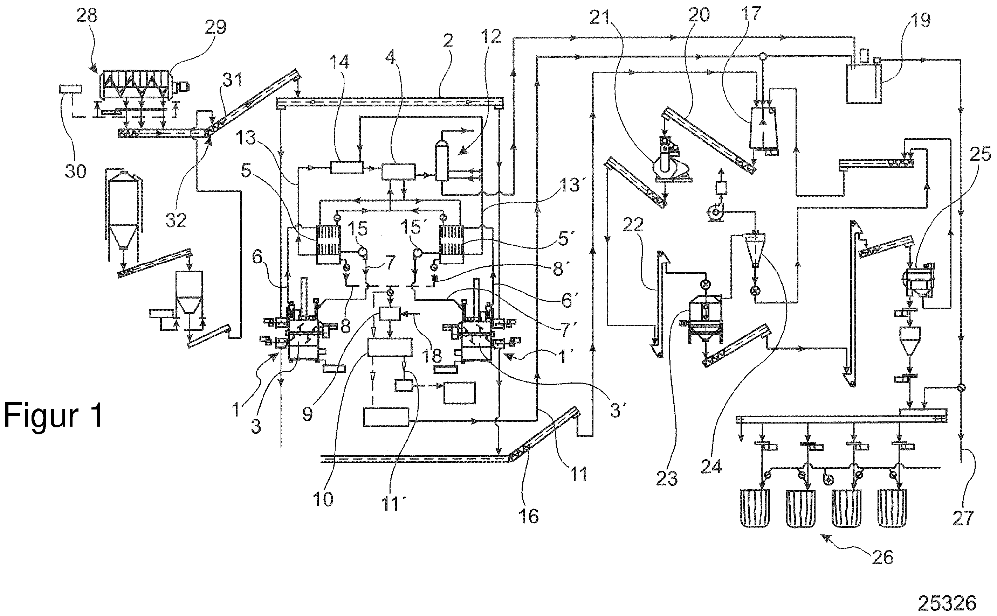

Ein Ausführungsbeispiel der Erfindung, aus dem sich weitere erfindungswesentliche Merkmale ergeben, ist in der Zeichnung dargestellt. Die Zeichnung der Erfindung zeigt ein Fließbild einer erfindungsgemäßen Vorrichtung.

Die Vorrichtung weist insgesamt zwei Aufbereiter 1, 1' auf, die über einen gemeinsamen Förderschneckenverteiler 2 mit biologisch abbaubarem Material beschickt werden, insbesondere abwechselnd mit biologisch abbaubarem Material beschickt werden. Jeder Aufbereiter weist dabei einen geschlossenen Behälter 3, 3' auf, in denen das biologisch abbaubare Material aufgemischt und hygienisiert wird. Den Aufbereitern 1, 1' ist dabei ein Unterdruckerzeuger 4 einer Unterdruckeinheit zugeordnet.

Zwischen dem jeweiligen Aufbereiter 1, 1' und dem Unterdruckerzeuger 4 ist je Aufbereiter 1, 1' eine Kühleinheit 5, 5' angeordnet, der die dem biologisch abbaubaren Material im Aufbereiter 1, 1' entzogenen flüchtigen Substanzen über entsprechende Leitungsabschnitte 6, 6' zugeleitet wird. Diese Leitungsabschnitte 6, 6' bilden zusammen mit Leitungsabschnitten 7, 7' einen geschlossenen Kreislauf zwischen dem jeweiligen Aufbereiter 1, 1' und der jeweiligen Kühleinheit 5, 5' aus. An die Kühleinheit 5, 5' ist jeweils noch eine Ableitung 8, 8' zu einem Kondensatsreservoir 9 ausgebildet. Dieses Kondensatreservoir 9 bildet einen Pufferbehälter zu einem nachgeordneten Eindampfer 10. Der Eindampfer 10 weist wiederum getrennte Ableitungen 11,11' für ein Eindampfkonzentrat und für ein Destillat auf.

Dem Unterdruckerzeuger 4 ist weiterhin noch eine Aufreinigungseinrichtung 12 derart nachgeordnet, dass der Unterdruckerzeuger 4 in Strömungsrichtung wenigstens eines Teilstroms der dem biologisch abbaubaren Material entzogenen, flüchtigen Substanzen zwischen der jeweiligen Kühleinheit 5, 5' und der Aufreinigungseinrichtung 12 angeordnet ist. Zwischen dem Unterdruckerzeuger 4 und den Kühleinheiten 5, 5' ist zudem ein Kühlwasserkreislauf 13, 13' ausgebildet, der entsprechend eine Kühlwasserpumpe 14 aufweist.

Beim Betrieb der Vorrichtung kann jetzt mit dem Unterdruckerzeuger 4 in den geschlossenen Behältern 3, 3' der Aufbereiter 1, 1', den Kühleinheiten 5, 5' sowie der Aufreinigungseinrichtung 12 ein Unterdruck von bis zu 300 mbar, insbesondere bis zu 250 mbar, erzeugt werden. Über den Förderschneckenverteiler 2 einem der Aufbereiter 1, 1' zugeführtem biologisch abbaubaren Material wird jetzt bei Absenkung des absoluten Drucks in dem geschlossenen Behälter 3, 3' des Aufbereiters 1, 1' auf einer ersten Druckstufe aufgrund des Partialdrucks zunächst Ammoniak als flüchtige Substanz in einem Gasgemisch entzogen. Das im Ausführungsbeispiel beschriebene biologisch abbaubare Material enthält dabei zur Vereinfachung als flüchtige Substanz lediglich Ammoniak. Dieses ammoniakhaltige Gasgemisch wird über die Kühleinheit 5, 5' und den Unterdruckerzeuger 4 der Aufreinigungseinrichtung 12 zugeführt. In der als Waschkolonne ausgebildeten Aufreinigungseinrichtung 12 wird dann mittels einer Waschflüssigkeit das Ammoniak im Gegenstrom aus dem Gasgemisch ausgewaschen. Das Ammoniak fällt dann, bei Verwendung von Schwefelsäure als Waschflüssigkeit, als Ammoniumsulfat-Lösung im Sumpf der Waschkolonne an. Das aufgereinigte Gasgemisch wird also in die Umwelt abgegeben.

Nach Entweichen des Ammoniaks aus dem biologisch abbaubaren Material senkt sich der absolute Druck aufgrund des anliegenden Vakuums in dem Aufbereiter 1, 1' auf eine zweite, niedrigere Druckstufe. Auf der zweiten Druckstufe verschiebt sich der Siedepunkt in dem geschlossenen Behälter des Aufbereiters 1, 1' derart, dass im Aufbereiter 1, 1' enthaltenes Wasser aus dem biologisch abbaubaren Material seinen Aggregatzustand ändert und in dem Aufbereiter 1, 1' Wasserdampf gebildet wird. Dieser Wasserdampf wird als wasserdampfhaltiges Gasgemisch ebenso in die jeweilige Kühleinheit 5, 5' eingeleitet. In der Kühleinheit 5, 5' wird der Wasserdampf dann durch das Kühlwasser des Kühlwasserkreislaufs 13, 13' kondensiert, wobei auch Schwebstoffe und Reste an Ammoniak aus dem Gasgemisch abgetrennt werden. Das nicht mehr mit Wasserdampf beladene Gasgemisch wird anschließend über den jeweiligen Leitungsabschnitt 7, 7' und ein in dem Leitungsabschnitt 7, 7' angeordnetes Umluftgebläse 15, 15' zurück in den geschlossenen Behälter 3, 3' des Aufbereiters 1, 1' geführt.

Über das im Kreis geführte Gasgemisch kann so das biologisch abbaubare Material getrocknet werden. Das getrocknete Material wird anschließend über wenigstens eine Förderschnecke 16 einem Dosierbehälter 17 zugeführt.

Das in der Kühleinheit 5, 5' anfallende Kondensat wird in das Kondensatreservoir 9 eingeleitet. Im Kondensatreservoir 9 wird das Kondensat über eine entsprechende Zuleitung 18 mit Schwefelsäure versetzt, wobei das im Kondensat enthaltene Ammoniak mit der Schwefelsäure reagiert und Ammoniumsulfat bildet, und anschließend batchweise dem Eindampfer 10 zugeführt. In dem Eindampfer 10 wird das im Kondensat enthaltene Wasser soweit verdampft, bis eine mindestens 80-prozentige Ammoniumsulfat-Lösung vorliegt.

Die 80-prozentige Ammoniumsulfat-Lösung wird dann über die Ableitung 11 zusammen mit der im Sumpf der Waschkolonne der Aufreinigungseinrichtung 12 gewonnenen Ammoniumsulfat-Lösung einem Pufferbehälter 19 oder direkt einem Dosierbehälter 17 zugeführt. Im Dosierbehälter 17 erfolgt erfindungsgemäß ein Vermischen mit dem getrockneten biologisch abbaubaren Material. Das getrocknete Material ist dabei so trocken, dass dieses auch nach dem Vermischen mit der Ammoniumsulfat-Lösung noch im Pressbereich ist. Von dem Dosierbehälter 17 gelangt das Gemisch aus getrocknetem Material und Ammoniumsulfat dann über eine Dosierschnecke 20 in eine Presse 21, in der das Gemisch zu Pellets gepresst wird. Der Presse 21 nachgeschaltet sind dann diverse Nachbehandlungsschritte, um Stäube zu beseitigen und gegebenenfalls in den Dosierbehälter 17 zurückzuführen.

Zunächst werden die gepressten Pellets dafür in einem ersten Schritt über einen Becherelevator 22 einem Kühler 23 zugeführt. Abluft aus dem Kühler 23 gelangt dann zu einem Zyklon 24, wobei in dem Zyklon 24 zurückgewonnene Feststoffe in den Dosierbehälter 17 rückgeführt werden. In einem weiteren Schritt werden die gepressten Pellets in einer Siebeinheit 25 gesiebt. Beim Sieben von den Pellets werden dann abgetrennte Bestandteile, wie die Feststoffe aus dem Zyklon 24, in den Dosierbehälter 17 rückgeführt. Der Siebeinheit 25 nachfolgend ist eine Kommissionierung und eine Verladung 26 vorgesehen, bei der die Pellets für einen weiteren Transport und deren weitere Verwendung verpackt werden, beispielsweise in Big-Packs.

Das Pressen des getrockneten Materials kann dabei auch ohne Zugabe von Ammoniumsulfat-Lösung erfolgen. Anstatt in den Dosierbehälter 17 wird die gesamte Ammoniumsulfat-Lösung, die beim Eindampfer 10 und der Aufreinigungseinrichtung 12 anfällt, dem Pufferbehälter 19 zugeführt und von diesem entweder einer gesonderten Abfüllung 27 oder im Vorfeld der Kommissionierung und Verladung 26 in einem zwischengeschalteten dritten Schritt auf die fertigen Pellets aufgesprüht.

In Abhängigkeit von den Eigenschaften des jeweiligen biologisch abbaubaren Materials kann eine Vorbehandlung nötig sein. Dem Förderschneckenverteiler 2 ist daher in dem Fließbild noch eine Vorbehandlungseinheit 28 vorgeschaltet, die durch einen Behälter 29 mit einem Mischwerk gebildet ist.

Weiter weist die Vorbehandlungseinheit 28 eine dem Behälter 29 zugeordnete Wiegeeinrichtung 30 auf. Das vorbehandelte biologisch abbaubare Material gelangt dann über einen Schieber und eine Förderschnecke 31 zu dem Förderschneckenverteiler 2. Die Förderschnecke 31 weist zudem eine Zugabeeinrichtung 32 zur Beimengung einer Kalkmischung auf.

## Patentansprüche

1. Verfahren zur Aufbereitung von biologisch abbaubaren Materialien, insbesondere Gärresten, Geflügelmist, Schweinegülle oder Rindergülle,
bei dem das biologisch abbaubare Material in einem Aufbereiter (1, 1') hygienisiert wird,
bei dem während der Hygienisierung in dem Aufbereiter (1, 1') flüchtige Substanzen, insbesondere Ammoniak, aus dem biologisch abbaubaren Material ausgetrieben werden und in einem Gasgemisch angereichert werden, bei dem das angereicherte Gasgemisch aus dem Aufbereiter (1, 1') abgezogen wird, einer Aufreinigung zugeführt wird und die flüchtigen Substanzen in der Aufreinigung mit einer Waschflüssigkeit aus dem Gasgemisch ausgewaschen werden, und
bei dem das dann ammoniumarme, biologisch abbaubare Material getrennt von dem Gasgemisch aus dem Aufbereiter (1, 1') entnommen wird und einer weiteren Verwendung zugeführt wird,
wobei in dem Aufbereiter (1, 1') ein Unterdruck anliegt, und
wobei die flüchtigen Substanzen aufgrund ihres jeweiligen Partialdrucks durch den anliegenden Unterdruck dem biologisch abbaubaren Material entzogen werden,
**dadurch gekennzeichnet,**
**dass** durch den an dem Aufbereiter (1, 1') anliegenden Unterdruck eine stufenweise Druckabsenkung in dem Aufbereiter (1, 1') erfolgt,
**dass** durch die Druckabsenkung in dem Aufbereiter (1, 1') auf einer ersten Druckstufe aufgrund des jeweiligen Partialdrucks flüchtige Substanzen, insbesondere Ammoniak, aus dem biologisch abbaubaren Material ausgetrieben werden,
**dass**, nach dem die flüchtigen Substanzen ausgetrieben wurden, der Druck in dem Aufbereiter (1, 1') auf eine zweite, niedrigere Druckstufe abgesenkt wird, so dass sich der Siedepunkt in dem Aufbereiter (1, 1') derart verschiebt, dass im Aufbereiter (1, 1') enthaltenes Wasser seinen Aggregatzustand ändert und in dem Aufbereiter (1, 1') Wasserdampf gebildet wird,
**dass** der im Aufbereiter (1, 1') entstandene Wasserdampf als wasserdampfhaltiges Gasgemisch einer Kühleinheit (5, 5') zugeführt wird, und dass der Wasserdampf in der Kühleinheit (5, 5') kondensiert wird.

2. Verfahren nach Anspruch 1, **dadurch gekennzeichnet, dass** das Gasgemisch zwischen dem Aufbereiter (1, 1') und der Kühleinheit (5, 5') in einem Kreislauf geführt wird, insbesondere einem geschlossenen Kreislauf geführt wird.

3. Verfahren nach Anspruch 1 oder 2, **dadurch gekennzeichnet, dass** das Kondensat aus der Kühleinheit (5, 5') aufgefangen wird und eingedampft wird, wobei das im Kondensat enthaltene Wasser verdampft und Verunreinigungen aus dem Wasser abgetrennt werden.

4. Verfahren nach einem der Ansprüche 1 bis 3, **dadurch gekennzeichnet, dass** dem Kondensat zum oder vor dem Eindampfen Schwefelsäure beigemengt wird.

5. Verfahren nach einem der vorhergehenden Ansprüche, **dadurch gekennzeichnet, dass** dem biologisch abbaubaren Material eine Kalkmischung beigemengt wird.

6. Verfahren nach einem der vorhergehenden Ansprüche, **dadurch gekennzeichnet, dass** das aus dem Aufbereiter (1, 1') entnommene biologisch abbaubare Material pelletiert wird.

7. Verfahren nach einem der vorhergehenden Ansprüche, **dadurch gekennzeichnet, dass** das aus dem Aufbereiter (1, 1') entnommene biologisch abbaubare Material mit aus dem Verfahren gewonnenem Ammoniumsulfat vermengt wird.

8. Vorrichtung zur Aufbereitung (1, 1') von biologisch abbaubaren Materialien, insbesondere Gärresten, Geflügelmist, Schweinegülle oder Rindergülle,
insbesondere zur Durchführung des Verfahrens nach Anspruch 1 bis 9,
mit wenigstens einem Aufbereiter (1, 1'), welcher einen geschlossenen Behälter (3, 3') mit einem Mischwerk zur Aufnahme des biologisch abbaubaren Materials aufweist und einer Entnahmeeinrichtung für ammoniumarmes, biologisch abbaubares Material aus dem Aufbereiter (1, 1'), wenigstens einer sich an den Aufbereiter (1, 1') anschließenden Aufreinigungseinrichtung (12) für ein aus dem geschlossenen Behälter (3, 3') abziehbares Gasgemisch, aufweisend wenigstens eine Waschkolonne, die geeignet ist Ammoniak und andere flüchtige Substanzen aus dem Gasgemisch auszuwaschen,
wobei dem Aufbereiter (1, 1') eine Unterdruckeinheit zugeordnet ist, **dadurch gekennzeichnet,**
**dass** die Unterdruckeinheit der Aufreinigungseinrichtung (12) in Strömungsrichtung wenigstens eines Teilstroms des aus dem Aufbereiter (1, 1') abzuziehenden Gasgemisches vorgeschaltet ist,
**dass** die Unterdruckeinheit eine Kühleinheit (5, 5') aufweist,
**dass** die Kühleinheit (5, 5') ein Kondensatreservoir (9) aufweist, und
**dass** die Unterdruckeinheit wenigstens einen Unterdruckerzeuger (4), insbesondere eine Vakuumpumpe, aufweist.

9. Vorrichtung nach Anspruch 8, **dadurch gekennzeichnet, dass** zwischen der Kühleinheit (5, 5') und dem geschlossenen Behälter (3, 3') des Aufbereiters (1, 1') ein geschlossener Kreislauf für das Gasgemisch ausgebildet ist

10. Vorrichtung nach einem der Ansprüche 8 oder 9, **dadurch gekennzeichnet, dass** die Kühleinheit (5, 5') in Strömungsrichtung wenigstens eines Teilstroms des aus dem Aufbereiter (1, 1') abzuziehenden Gasgemisches, insbesondere des auf einer ersten Druckstufe aus dem Aufbereiter (1, 1') abzuziehenden Gasgemisches, zwischen dem Aufbereiter (1, 1') und dem Unterdruckerzeuger (4) angeordnet ist.

11. Vorrichtung nach einem der Ansprüche 8 bis 10, **dadurch gekennzeichnet, dass** an das Kondensatreservoir (9) der Kühleinheit (5, 5') ein Eindampfer (10) angeschlossen ist.

12. Vorrichtung nach einem der Ansprüche 8 bis 11, **dadurch gekennzeichnet, dass** dem geschlossenen Behälter (3, 3') des Aufbereiters (1, 1') eine Heizeinrichtung zugeordnet ist.

13. Vorrichtung nach einem der Ansprüche 8 bis 12, **dadurch gekennzeichnet, dass** dem Aufbereiter (1, 1') eine Vorbehandlungseinheit (28) für das biologisch abbaubare Material vorgeschaltet ist.

14. Vorrichtung nach einem der Ansprüche 8 bis 13 dass dem Aufbereiter (1, 1') eine Zugabeeinrichtung (32) für eine Kalkmischung vorgeschaltet ist.

## Claims

1. Process for treating biodegradable materials, in particular fermentation residues, poultry manure, pig manure or cattle manure,
in which the biodegradable material is hygienized in a conditioner (1, 1'),
in which, during the hygienization in the conditioner (1, 1'), volatile substances, in particular ammonia, are expelled from the biodegradable material and are enriched in a gas mixture,
in which the enriched gas mixture is drawn off from the conditioner (1, 1'), is fed to a purification process and the volatile substances in the purification process are washed out of the gas mixture with a washing liquid, and
in which the biodegradable material, which is then low in ammonium, is removed from the conditioner (1, 1') separately from the gas mixture and is fed to a further use,
wherein a negative pressure is present in the conditioner (1, 1'), and
wherein the volatile substances are removed from the biodegradable material on the basis of their respective partial pressure by the negative pressure present,
**characterized,**
**in that** the negative pressure applied to the conditioner (1, 1') causes a stepwise pressure reduction in the conditioner (1, 1'),
**in that** the pressure reduction in the conditioner (1, 1') at a first pressure level causes volatile substances, in particular ammonia, to be expelled from the biodegradable material on the basis of the respective partial pressure,
that, after the volatile substances have been expelled, the pressure in the conditioner (1, 1') is lowered to a second, lower pressure stage, so that the boiling point in the conditioner (1, 1') shifts in such a way that water contained in the conditioner (1, 1') changes its aggregate state and water vapor is formed in the conditioner (1, 1'), 1'),
that the water vapor formed in the conditioner (1, 1') is fed to a cooling unit (5, 5') as a gas mixture containing water vapor, and that the water vapor is condensed in the cooling unit (5, 5').

2. Method according to claim 1, **characterized in that** the gas mixture is circulated between the conditioner (1, 1') and the cooling unit (5, 5'), in particular in a closed circuit.

3. Method according to claim 1 or 2, **characterized in that** the condensate from the cooling unit (5, 5') is collected and evaporated, whereby the water contained in the condensate is vaporated and impurities are separated from the water.

4. Process according to one of claims 1 to 3, **characterized in that** sulphuric acid is added to the condensate for or before evaporation.

5. Process according to one of the preceding claims, **characterized in that** a lime mixture is added to the biodegradable material.

6. Method according to one of the preceding claims, **characterized in that** the biodegradable material removed from the conditioner (1, 1') is pelletized.

7. Process according to one of the preceding claims, **characterized in that** the biodegradable material removed from the conditioner (1, 1') is mixed with ammonium sulphate obtained from the process.

8. Apparatus for conditioning (1, 1') biodegradable materials, in particular fermentation residues, poultry manure, pig manure or cattle manure, in particular for carrying out the process according to claims 1 to 9,
having at least one conditioner (1, 1') which has a closed container (3, 3') with a mixing mechanism for receiving the biodegradable material and a removal device for low-ammonium, biodegradable material from the conditioner (1, 1'), comprising at least one purification device (12) adjoining the conditioner (1, 1') for a gas mixture which can be extracted from the closed container (3, 3'), having at least one washing column which is suitable for washing ammonia and other volatile substances out of the gas mixture,
wherein a vacuum unit is associated with the conditioner (1, 1'),
**characterized in**
**that** the vacuum unit of the purification device (12) is arranged in the flow direction of at least a partial flow of the gas mixture to be extracted from the conditioner (1, 1'),
**that** the vacuum unit has a cooling unit (5, 5'),
**that** the cooling unit (5, 5') has a condensate reservoir (9), and
**that** the vacuum unit has at least one vacuum generator (4), in particular a vacuum pump.

9. Device according to claim 8, **characterized in that** a closed circuit for the gas mixture is formed between the cooling unit (5, 5') and the closed container (3, 3') of the conditioner (1, 1').

10. Device according to one of claims 8 or 9, **characterized in that** the cooling unit (5, 5') is arranged between the conditioner (1, 1') and the vacuum generator (4) in the direction of flow of at least a partial flow of the gas mixture to be withdrawn from the conditioner (1, 1'), in particular of the gas mixture to be withdrawn from the conditioner (1, 1') at a first pressure stage.

11. Device according to one of claims 8 to 10, **characterized in that** an evaporator (10) is connected to the condensate reservoir (9) of the cooling unit (5, 5').

12. Device according to one of claims 8 to 11, **characterized in that** a heating device is assigned to the closed container (3, 3') of the conditioner (1, 1').

13. Apparatus according to one of claims 8 to 12, **characterized in that** a pretreatment unit (28) for the biodegradable material is connected upstream of the conditioner (1, 1').

14. Apparatus according to one of claims 8 to 13 in that an addition device (32) for a lime mixture is connected upstream of the conditioner (1, 1').

## Revendications

1. Procédé de traitement de matières biodégradables, en particulier de résidus de fermentation, de fumier de volaille, de lisier de porc ou de lisier de bovin,
dans lequel la matière biodégradable est hygiénisée dans un conditionneur (1, 1'),
dans lequel, pendant l'hygiénisation dans le conditionneur (1, 1'), des substances volatiles, en particulier de l'ammoniac, sont extraites de la matière biodégradable et sont introduites dans un mélange gazeux de manière à l'enrichir,
dans lequel le mélange gazeux enrichi est extrait du conditionneur (1, 1'), est dirigé vers un processus de purification et, dans ledit processus de purification, les substances volatiles sont extraites du mélange gazeux par lavage avec un liquide de lavage, et
dans lequel le matériau biodégradable alors pauvre en ammonium est prélevé, séparément du mélange gazeux, hors du conditionneur (1, 1') puis dirigé vers une autre utilisation,
une pression négative étant appliquée au conditionneur (1, 1'), et
les substances volatiles étant extraites du matériau biodégradable en raison de leur pression partielle respective par la dépression appliquée,
**caractérisé en ce**
**qu'**en raison de la pression négative appliquée au conditionneur (1, 1'), la pression dans le conditionneur (1, 1') subit une baisse par étapes, que, la baisse par étapes de la pression dans le conditionneur (1, 1') fait en sorte qu'à un premier niveau de pression, les substances volatiles, en particulier de l'ammoniac, soient chassées de la matière biodégradable en raison de la pression partielle qu'elles présentent chacune,
**qu'**une fois les substances volatiles chassées, la pression dans le conditionneur (1, 1') subit une baisse à un deuxième niveau de pression plus bas, faisant en sorte que le point d'ébullition au sein du conditionneur (1, 1') soit modifié de manière à ce que l'eau contenue dans le conditionneur (1, 1') change d'état d'agrégation et de la vapeur d'eau se forme dans le conditionneur (1, 1')
**que** la vapeur d'eau formée dans le conditionneur (1, 1') est introduite, sous forme de mélange gazeux contenant de la vapeur d'eau, dans une unité de refroidissement (5, 5'), et
**que** la vapeur d'eau est condensée dans l'unité de refroidissement (5, 5').

2. Procédé selon la revendication 1, **caractérisé en ce que** l'on fait circuler le mélange de gaz entre le conditionneur (1, 1') et l'unité de refroidissement (5, 5'), notamment en circuit fermé

3. Procédé selon la revendication 1 ou 2, **caractérisé en ce que** le condensat provenant de l'unité de refroidissement (5, 5') est recueilli et réduit par évaporation, l'eau contenue dans le condensat étant évaporée et les impuretés étant séparées de l'eau.

4. Procédé selon l'une des revendications 1 à 3, **caractérisé en ce que** de l'acide sulfurique est ajouté au condensat au moment de l'évaporation ou avant celle-ci.

5. Procédé selon l'une des revendications précédentes, **caractérisé en ce qu'**un mélange de chaux est ajouté à la matière biodégradable.

6. Procédé selon l'une quelconque des revendications précédentes, **caractérisé en ce que** la matière biodégradable extraite du conditionneur (1, 1') est transformée en granulés.

7. Procédé selon l'une quelconque des revendications précédentes, **caractérisé en ce que** la matière biodégradable extraite du conditionneur (1, 1') est mélangée avec du sulfate d'ammonium obtenu à partir dudit procédé.

8. Dispositif destiné au conditionnement (1, 1') de matières biodégradables, en particulier de résidus de fermentation, de fumier de volaille, de lisier de porc ou de lisier de bovin, en particulier à la mise en œuvre du procédé selon les revendications 1 à 9,
comportant au moins un conditionneur (1, 1') qui comprend un récipient fermé (3, 3') pourvu d'un mélangeur pour recevoir la matière biodégradable et d'un dispositif permettant de prélever la matière biodégradable pauvre en ammonium dans le conditionneur (1, 1'),
au moins une installation de purification (12), située en aval du conditionneur (1, 1'), laquelle est destinée à un mélange de gaz pouvant être extrait du récipient fermé (3, 3') et laquelle comporte au moins une colonne de lavage, qui est appropriée pour enlever par lavage l'ammoniac et d'autres substances volatiles contenus dans le mélange de gaz,
une unité de dépression étant associée au conditionneur (1, 1'),
**caractérisé en ce**
**que** l'unité de pression négative est montée en amont du dispositif de purification (12) dans le sens d'écoulement d'au moins un flux partiel du mélange gazeux à extraire du conditionneur (1, 1'),
**que** l'unité de pression négative comporte une unité de refroidissement (5, 5'), que l'unité de refroidissement (5, 5') comporte un réservoir de condensat (9), et que l'unité de pression négative comporte au moins un générateur de pression négative (4), s'agissant notamment d'une pompe à vide.

9. Dispositif selon la revendication 8, **caractérisé en ce qu'**un circuit fermé, destiné au mélange de gaz, est établi entre l'unité de refroidissement (5, 5') et le récipient fermé (3, 3') du conditionneur (1, 1').

10. Dispositif selon l'une des revendications 8 ou 9, **caractérisé en ce que** l'unité de refroidissement (5, 5') est disposée entre le conditionneur (1, 1') et le générateur de pression négative (4), en suivant le sens d'écoulement d'au moins un flux partiel du mélange gazeux à extraire du conditionneur (1, 1'), s'agissant notamment du mélange gazeux à extraire du conditionneur (1, 1') à un premier niveau de pression.

11. Dispositif selon l'une des revendications 8 à 10, **caractérisé en ce qu'**un évaporateur (10) est raccordé au réservoir de condensat (9) de l'unité de refroidissement (5, 5').

12. Dispositif selon l'une des revendications 8 à 11, **caractérisé en ce qu'**un dispositif de chauffage est associé au récipient fermé (3, 3') du conditionneur (1, 1').

13. Dispositif selon l'une des revendications 8 à 12, **caractérisé en ce qu'**une unité de prétraitement (28) de la matière biodégradable est montée en amont du conditionneur (1, 1').

14. Dispositif selon l'une des revendications 8 à 13, en ce qu'un dispositif d'ajout (32) d'un mélange de chaux est monté en amont du conditionneur (1, 1').
